# EUROPEAN PATENT APPLICATION

(11) **EP 2 124 225 A1**
(43) Date of publication of application: **25.11.2009**
(21) Application number: 09156416.1
(22) Date of filing: 27.03.2009
(51) Int. Cl.: G11B 7/085, G11B 7/135, G11B 7/12

(54) **Gap pull-in method for near-field optical disk driver and optical disk driving apparatus using the method**

(30) Priority: 22.05.2008 KR 20080047742
(71) Applicant: Samsung Electronics Co., Ltd., Suwon-si, Gyeonggi-do (KR); Industry-academic Cooperation Foundation, Yonsei University, Seoul 120-743 (KR)
(72) Inventor: Park, Young-jae, Gyeonggi-do (KR); Kim, Jung-gon, Gyeonggi-do (KR); Park, No-cheol, Seoul (KR); Yang, Hyun-seok, Seoul (KR)
(74) Representative: D'Halleweyn, Nele Veerle Trees Gertrudis

(57) **Abstract**

A gap pull-in method that minimizes overshoot due to a moving speed of a light focusing element and disturbance of a disk when the light focusing element is converted from an open loop state to a closed loop state during a gap pull-in of a near-field optical disk driver, and an optical disk driving apparatus using the method, the gap pull-in method including: generating an inverse actuator driving signal having a pulse duration and a pulse amplitude according to a moving speed of a light focusing element when an open loop state is changed to a closed loop state in the gap pull-in; and driving an actuator using the inverse actuator driving signal.

## Description

### BACKGROUND OF THE INVENTION

### 1. Field of the Invention

Aspects of the present invention relate to a gap pull-in technology for a near-field optical disk drive, and more particularly, to a gap pull-in method that prevents a collision between a light focusing element and a disk due to overshoot, and an optical disk driving apparatus using the method.

### 2. Description of the Related Art

Recently, near-field optical disc drives able to record large amounts of data and to achieve a high data transfer rate (DTR) have been suggested. Such near-field optical disc drives are also referred to as near-field recording systems or near-field recording and/or reproducing systems. A near-field optical disc drive is a device to record and/or to reproduce data to/from a disc by using light in a near-field in which diffraction of light does not occur.

Such a near-field optical disc drive records and/or reproduces a large amount of information by recording and/or reproducing an information cell having a size of a hundredths of an angstrom (A) unit using near-field optical technology and ultra micro electro mechanical system (MEMS) technology. That is, by using a near-field optical disc drive, more than 20 Gigabytes of data, which is the amount of image data for high definition television (HDTV) that can be recorded with an image quality of MPEG-2 for more than 2 hours, can be recorded and/or reproduced to/from one surface of a disc having a 3 cm diameter. Thus, discs can be microminiaturized yet still store a large amount of data. Such a near-field optical disc drive includes an optical head having nanoscale precision and a gap servo control apparatus to control the optical head.

The optical head is also referred to as a pickup unit or an actuator header. The optical head includes a light focusing element including a solid immersion lens (SIL) attached thereto. In order to record or reproduce data to/from a disk, the gap servo control apparatus controls the light focusing element including the SIL attached thereto to move to a target level within a near-field range of 200 nm from the disk. Likewise, an operation in which the light focusing element is moved to the target level within the near-field range is a gap pull-in or a gap pull-in process.

However, since the optical head moves by several nanometers within the near-field range from the disk, when an open loop state is changed to a closed loop state in the gap pull-in, overshoot occurs due to a moving speed of the light focusing element and disturbance of a disk. Accordingly, the SIL attached to the light focusing element can easily collide with the disk.

### SUMMARY OF THE INVENTION

Aspects of the present invention provide a gap pull-in method that minimizes overshoot due to a moving speed of a light focusing element and disturbance of a disk when an open loop state is changed to a closed loop state in gap pull-in of a near-field optical disk driver, and an optical disk driving apparatus using the method.

According to an aspect of the present invention, there is provided a gap pull-in method for use in a near-field optical disk driver, the method including: generating an inverse actuator driving signal having a pulse duration and a pulse amplitude according to a moving speed of a light focusing element when an open loop state is changed to a closed loop state during a gap pull-in; and driving an actuator using the inverse actuator driving signal.

The moving speed of the light focusing element may be variable in the open loop state.

A gap pull-in section between a first point, at which a far-field range is changed to a near-field range in the open loop state, and a second point, at which the open loop state is changed to the closed loop state, may be divided into N number of sections, and the moving speed of the light focusing element may be variably set for each respective section of the N number sections, where N is an integer equal to or greater than 2.

The gap pull-in section between the first point and the second point may be divided according to a time unit.

The moving speed of the light focusing element for each respective section divided from the N number of sections may decrease towards the second point.

When it is determined that a moving direction of an optical head is opposite to a moving direction of a surface of a disk according to the moving speed of the light focusing element, the generating of the inverse actuator driving signal may include generating the inverse actuator driving signal so that the pulse duration and/or the pulse amplitude is set to be greater than a currently set pulse duration and/or a currently set pulse amplitude, respectively; and when it is determined that the moving direction of the light focusing element is the same direction as the moving direction of the optical head according to the moving speed of the light focusing element, the generating of the inverse actuator driving signal may include generating the inverse actuator driving signal so that the pulse duration and/or the pulse amplitude is set to be equal to or less than the currently set pulse duration and/or the currently set pulse amplitude, respectively.

The pulse duration and the pulse amplitude of the inverse actuator driving signal may be proportional to the moving speed of the light focusing element.

According to another aspect of the present invention, there is provided an optical disk driving apparatus having a disk loaded therein, the optical disk driving apparatus including: an optical head including a light focusing element to focus light on the disk and an actuator to move the light focusing element in a focusing direction; a gap error signal detection unit to detect a gap error signal from a signal output from the optical head; an actuator driving unit to drive the actuator included in the optical head; and a gap servo controlling unit to provide an actuator driving signal for gap pull-in to the actuator driving unit according to the gap error signal output from the gap error signal detection unit, wherein, when an open loop state is changed to a closed loop state in the gap pull-in, the gap servo controlling unit generates an inverse actuator driving signal having a pulse duration and a pulse amplitude, based on a moving speed of the light focusing element, and the actuator driving signal includes the generated inverse actuator driving signal.

The gap servo controlling unit may change the moving speed of the light focusing element in the open loop state.

The gap servo controlling unit may divide a gap pull-in section between a first point, at which a far-field range is changed to a near-field range in the open loop state, and a second point, at which the open loop state is changed to the closed loop state, into N number of sections, and the moving speed of the light focusing element may be variably set for each respective section divided from the N number of sections, where N is an integer equal to or greater than 2.

The gap pull-in section between the first point and the second point may be divided according to a time unit.

The moving speed of the light focusing element for each respective section divided from the N number of sections may decrease towards the second point.

The gap servo controlling unit may generate the inverse actuator driving signal so that the pulse duration and/or the pulse amplitude is set to be greater than a currently set pulse duration and/or a currently pulse amplitude, respectively, when it is determined that a moving direction of the optical head is opposite to a moving direction of a surface of the disk according to the moving speed of the light focusing element, and the gap servo controlling unit may generate the inverse actuator driving signal so that the pulse duration and/or the pulse amplitude is set to be equal to or less than the currently set pulse duration and/or the currently set pulse amplitude, respectively, when it is determined that the moving direction of the light focusing element is the same direction as the moving direction of the optical head according to the moving speed of the light focusing element.

The pulse duration and pulse amplitude of the inverse actuator driving signal may be proportional to the moving speed of the light focusing element.

According to another aspect of the present invention, there is provided a gap pull-in method for a near-field optical disk drive including a light focusing element, the method including: generating an inverse actuator driving signal, for driving an actuator, having a pulse duration and a pulse amplitude according to a moving speed of the light focusing element when an open loop state is changed to a closed loop state during a gap pull-in.

According to another aspect of the present invention, there is provided an optical disk driving apparatus to control an actuator to move a light focusing element of the optical head, the optical disk driving apparatus including: a gap servo controlling unit to generate an inverse actuator driving signal, for driving the actuator, having a pulse duration and a pulse amplitude according to a moving speed of the light focusing element when an open loop state is changed to a closed loop state during a gap pull-in.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a functional block diagram of an optical disk driving apparatus according to an embodiment of the present invention;
FIG. 2 illustrates a gap pull-in process according to an embodiment of the present invention;
FIG. 3 illustrates a gap pull-in process according to another embodiment of the present invention; and
FIG. 4 is a flow chart of a gap pull-in process according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

Aspects of the present invention provide a gap pull-in method and an optical disk drive apparatus using the method. In the gap pull-in method according to aspects of the present invention, when an open loop state is changed to a closed loop state in gap pull-in of a near-field optical disk drive, an actuator is driven by an inverse actuator driving signal that is adaptively generated according to a moving speed of the light focusing element. Thus, the occurrence of an overshoot that results from a disturbance of a disk and a moving speed of the light focusing element when the open loop state is changed to the closed loop state, can be minimized. Accordingly, a collision between a solid immersion lens (SIL) and the disk can be prevented. The moving speed of the light focusing element can be referred to as a gap pull-in speed.

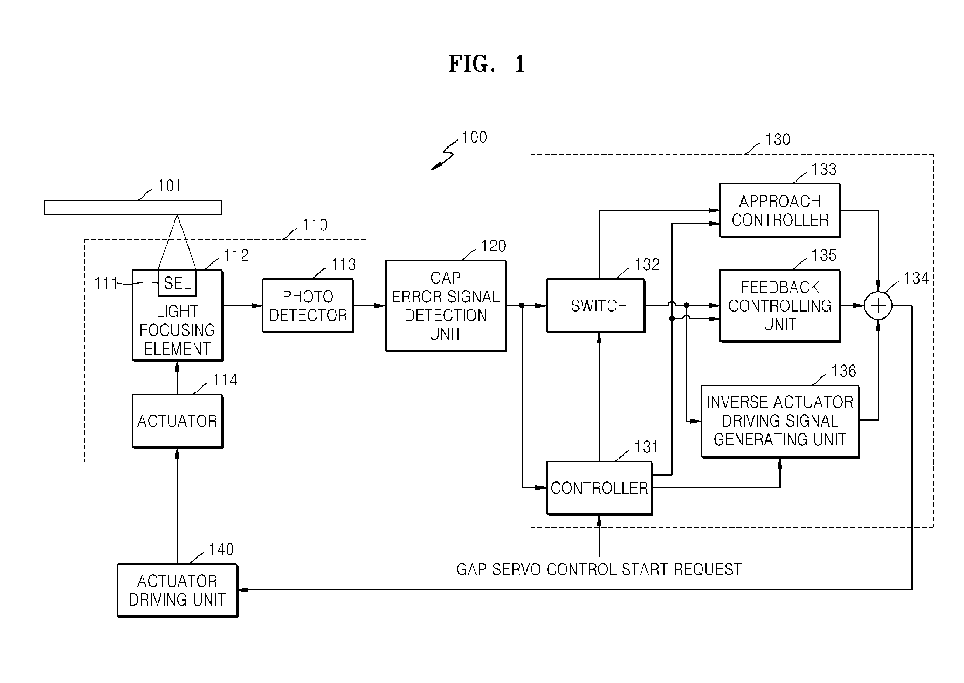

FIG. 1 is a functional block diagram of an optical disk drive apparatus 100 according to an embodiment of the present invention. Referring to FIG. 1, the optical disk drive apparatus 100 includes a disk 101 loaded in the optical disk drive apparatus 100, an optical head 110, a gap error signal detection unit 120, a gap servo controlling unit 130, and an actuator driving unit 140.

The disk 101 is a disk for recording and reproducing data using light in a near-field. The optical head 110 includes a light focusing element 112 to which a solid immersion lens (SIL) 111 is attached to focus light on a recording surface of the disk 101 in a near-field, a photo detector 113 to detect light reflected by the disk 101 through the light focusing element 112, and an actuator 114 to move the light focusing element 112 in a focusing direction. The photo detector 113 can be referred to for a unit to convert the amount of light reflected by the disk 101 into an electric signal or a voltage.

The gap error signal detection unit 120 detects a gap error signal (GES) from the electric signal output by the photo detector 113. That is, the gap error signal detection unit 120 generates and outputs the GES to be used in the gap servo controlling unit 130 by regulating a gain and offset of the electric signal received from the photo detector 113.

The gap servo controlling unit 130 outputs an actuator driving signal to perform a gap pull-in operation, according to the GES received by the gap servo controlling unit 130. To achieve this, the gap servo controlling unit 130 includes a controller 131, a switch 132, an approach controller 133, an adder 134, a feedback controlling unit 135, and an inverse actuator driving signal generating unit 136.

When a gap servo control start request is received from an external element, the controller 131 sets a moving speed of the light focusing element 112 and an operating time on the moving speed in an initial stage of an open loop state. The initial stage of the open loop state may correspond to a far-field range and the moving speed of the light focusing element 112 may be referred to as a gap pull-in speed. Furthermore, the gap servo control start request may be referred to as a gap pull-in request. When the moving speed is "A" and the operating time on moving speed "A" is "B," since the gap servo controlling unit 130 moves the light focusing element 112 at the moving speed "A" for the period of time "B," the operating time on the moving speed may be referred to as a time-out. The moving speed and the time-out of the light focusing element 112 may be previously set. The controller 131 controls the switch 132 and the approach controller 133 according to the moving speed and the time-out of the light focusing element 112. That is, the switch 132 is controlled by the controller 131 so that the GES output from the gap error signal detection unit 120 is transmitted to the approach controller 133 in an open loop state.

When the GES is input to the approach controller 133, the approach controller 133 outputs a signal to perform the open loop state during the gap pull-in. The open loop state may be an approach operation in which the light focusing element 112 is approached from the far-field range up to a target point in the near-field range. Thus, when the GES is detected as the light focusing element 112 is driven with respect to the recording surface of the disk 101 during the gap pull-in, the approach controller 133 outputs a linear signal until the far-field range is changed to a near-field range.

When the level of the GES input to the controller 131 begins to decrease, the controller 131 determines to change the far-field range into the near-field range. Accordingly, the moving speed and time-out of the light focusing element 112 are updated so as to be suitable for the near-field range. At this time, the update on the moving speed and time out of the light focusing element 112 can be performed by using values that are previously set. The controller 131 provides the updated moving speed and time-out of the light focusing element 112 to the approach controller 133. Thus, the approach controller 133 outputs a linear signal so that the light focusing element 112 is moved at the updated moving speed for a period of time controlled by the time-out. At this time, since the updated moving speed of the light focusing element 112 is set to be slower than the moving speed in the far-field range, a gradient of the linear signal output by the approach controller 133 is smaller than a gradient of the linear signal in the far-field range.

The controller 131 may set the time-out so that the moving speed, which is currently set, is maintained until the level of the GES reaches a target level in the near-field range. However, the controller 131 divides a section between a first point and a second point into N number of sections. At the first point, the level of the GES is changed from the far-field range to the near-field range. At the second point, the level of the GES reaches the target level within the near-field range. In addition, the controller 131 may variably set a moving speed of the light focusing element 112 for each respective divided section of the N number of sections. The second point is a point where the open loop state is changed to a closed loop state in the gap pull-in. In addition, N is an integer equal to or greater than 2. The section between the first and second points may be divided according to a period of time. That is, the moving speed of the light focusing element 112 may be updated according to the time-out. The moving speed of the light focusing element 112 for each respective section of the N number of sections may be a value that is previously set, and may be set so as to decrease towards the second point. Thus, the moving speed of the light focusing element 112 in a section closer to the first point is set so as to be faster than the moving speed of the light focusing element 112 in a section closer to the second point.

As the moving speed of the light focusing element 112 is updated according to the time-out that is set as described above and the gap pull-in is performed, when a point of time where the open loop state is changed to the closed loop state is detected by the input GES, the controller 131 controls the switch 132 so that the GES is transmitted to the feedback controlling unit 135 and the inverse actuator driving signal generating unit 136. In addition, the controller 131 provides the current moving speed of the light focusing element 112 to the inverse actuator driving signal generating unit 136.

The inverse actuator driving signal generating unit 136 generates an inverse actuator driving signal having a pulse duration and a pulse amplitude, based on the current moving speed of the light focusing element 112, provided by the controller 131, at a point of time where the open loop state is changed to the closed loop state. That is, when the inverse actuator driving signal generating unit 136 determines that the moving speed of the light focusing element 112 is faster than a predetermined reference value, the inverse actuator driving signal generating unit 136 determines that a moving direction of the optical head 110 is opposite to a moving direction of a surface of the disk 101. Thus, the inverse actuator driving signal generating unit 136 generates an inverse actuator driving signal having a pulse duration and a pulse amplitude, wherein at least one of the pulse duration and the pulse amplitude is adjusted so as to be greater than the current pulse duration and the current pulse amplitude, respectively.

However, when the moving speed of the light focusing element 112 is the same as the predetermined reference value, the inverse actuator driving signal generating unit 136 determines that the moving direction of the optical head 110 is the same direction as the surface of the disk 101. Thus, the inverse actuator driving signal generating unit 136 generates the inverse actuator driving signal having a pulse duration and a pulse amplitude that correspond to the current pulse duration and pulse amplitude. In addition, when the moving speed of the light focusing element 112 is slower than the reference that is previously set, the inverse actuator driving signal generating unit 136 determines that the moving direction of the optical head 110 is the same as the moving direction of the surface of the disk 101. However, in this case, the inverse actuator driving signal generating unit 136 generates an inverse actuator driving signal having a pulse duration and a pulse amplitude, wherein at least one of the pulse duration and the pulse amplitude is adjusted so as to be less than the current pulse duration and the current pulse amplitude, respectively.

Likewise, when the inverse actuator driving signal generating unit 136 determines that the moving direction of the optical head 110 is the same direction as the moving direction of the surface of the disk 101, the inverse actuator driving signal generating unit 136 generates an inverse actuator driving signal having a pulse duration and a pulse amplitude, wherein at least one of the pulse duration and the pulse amplitude is adjusted so as to be equal to or less than the current pulse duration and the current pulse amplitude, respectively.

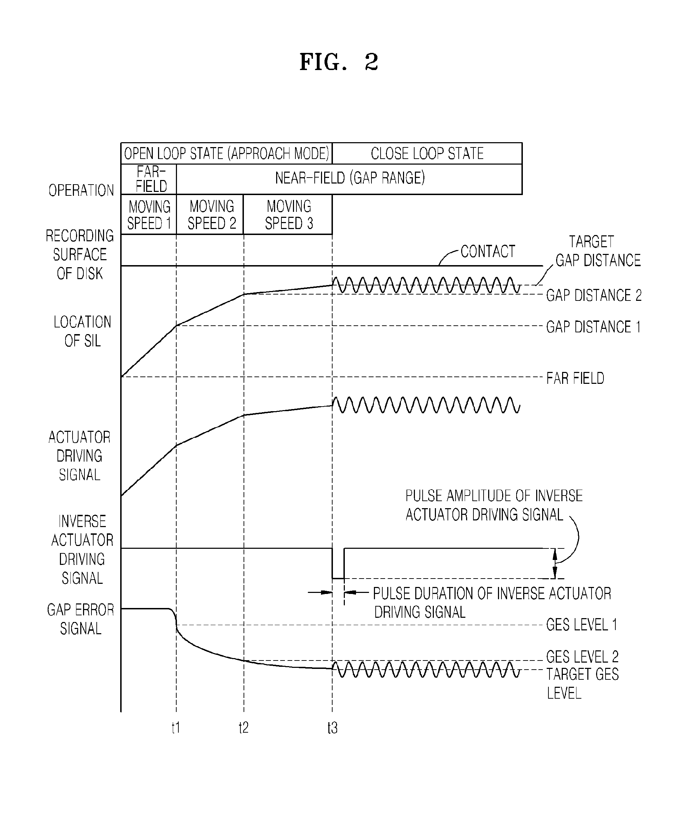

FIG. 2 illustrates a case where a gap pull-in is performed by moving the light focusing element 112 at two moving speeds (a moving speed 2 and a moving speed 3) from a first point "t1" to a second point "t3." Referring to FIG. 2, the inverse actuator driving signal generating unit 136 generates an inverse actuator driving signal having a pulse duration and a pulse amplitude, based on the moving speed 3, at a point of time where the level of the GES is changed from the open loop state to the closed loop state.

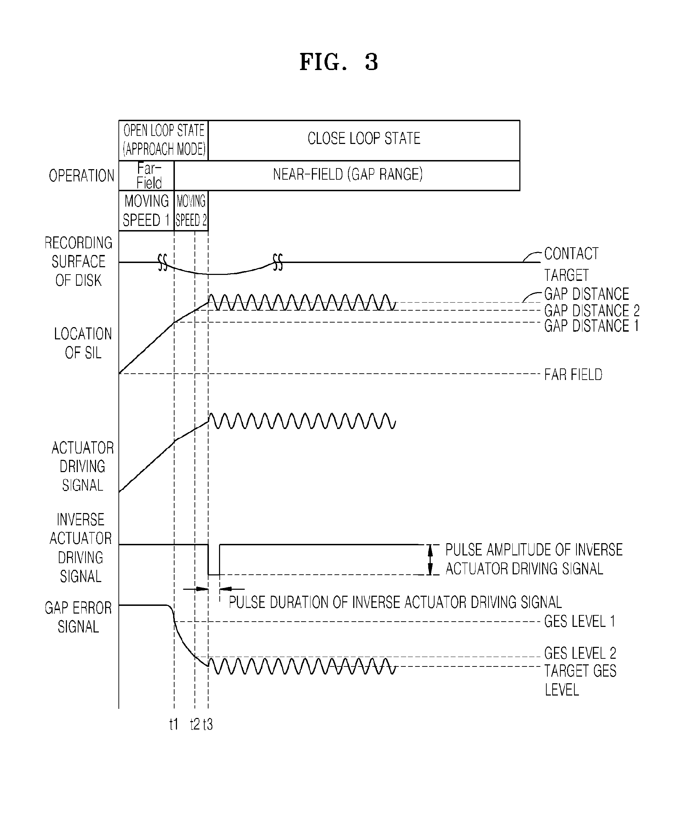

FIG. 3 illustrates a case where the second point "t3" is detected prior to reaching the time-out of the moving speed 2. Likewise, when a target level of GES is detected early, the inverse actuator driving signal generating unit 136 generates an inverse actuator driving signal having a pulse duration and a pulse amplitude, wherein at least one of the pulse duration and the pulse amplitude in FIG. 3 is greater than the pulse duration and the pulse amplitude of the inverse actuator driving signal of FIG. 2, respectively, thereby minimizing overshoot.

Referring back to FIG. 1, the feedback controlling unit 135 outputs a servo controlling signal to perform the open loop state and the closed loop state in the near-field range.

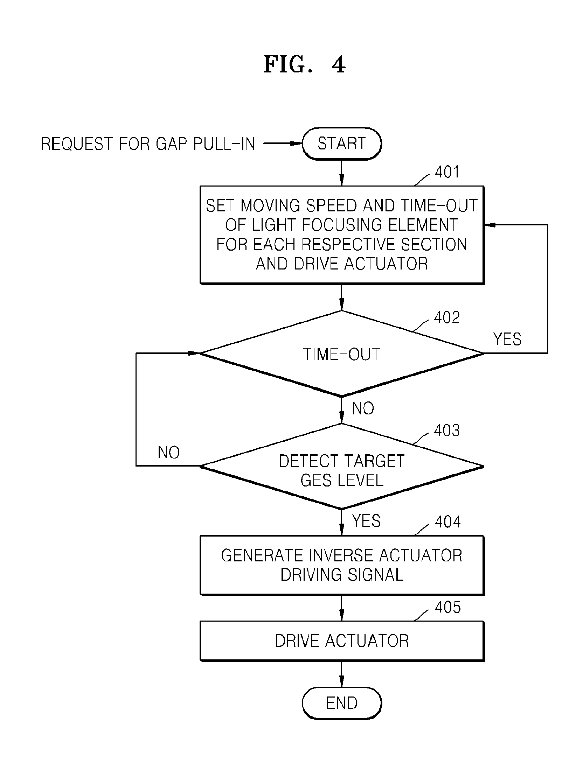

FIG. 4 is a flow chart of a gap pull-in method according to an embodiment of the present invention. Referring to FIG. 4, when an optical disk drive is requested to perform gap pull-in, the optical disk drive drives an actuator while setting a moving speed of a light focusing element included in the disk drive and a time-out based on the moving speed for each respective section. Since an initial stage of the gap pull-in corresponds to a far-field range, the moving speed and time-out of the light focusing element are set using values that are previously set as described with reference to FIG. 1 and the actuator is driven in operation 401.

As a result of monitoring the set time-out, when it is determined that a moving time of the light focusing element reaches the time-out in operation 402, the method returns to operation 401. Then, by using the moving speed and time-out of the light focusing element, which are set for each respective section, a current moving speed and a current time-out of the light focusing element are updated, and then the actuator is driven. The moving speed of the light focusing element in the open loop state may be set so as to vary. That is, a gap pull-in section between a first point and a second point may be divided into N number of sections. At the first point, the far-field range is changed to a near-field range in the open loop state, and at the second point, the open loop state is changed to the closed loop state. Then, the moving speed of the light focusing element may be variably set for each respective section of the N number of sections.
N is an integer equal to or greater than 2. The section between the first and second points may be divided according to a period of time. The moving speed of the light focusing element for each respective section may decrease towards the second section.

However, when it is determined that the moving time of the light focusing element has not reached the time-out (operation 402), it is determined whether a target level of GES is detected in operation 403. When the target level of GES is detected, since the open loop state is changed to the closed loop state in the gap pull-in, an inverse actuator driving signal having a pulse duration and a pulse amplitude, according to the current moving speed of the light focusing element, is generated in operation 404. That is, when it is determined that a moving direction of an optical head is opposite to a moving direction of a surface of a disk according to the moving speed of the light focusing element, an inverse actuator driving signal having a pulse duration and a pulse amplitude may be generated, wherein at least one of the pulse duration and the pulse amplitude (i.e., the pulse duration and/or the pulse amplitude) is set so as to be greater than the current pulse duration and the current pulse amplitude. On the other hand, when it is determined that the moving direction of the optical head is the same direction as the moving direction of the surface of the disk according to the moving speed of the light focusing element, an inverse actuator driving signal having a pulse duration and a pulse amplitude may be generated, wherein at least one of the pulse duration and the pulse amplitude (i.e., the pulse duration and/or the pulse amplitude) is set so as to be less than the current pulse duration and the current pulse amplitude or the pulse duration and the pulse amplitude are maintained at the current pulse duration and the current pulse amplitude. That is, when it is determined that the moving direction of the optical head is the same direction as the moving direction of the surface of the disk according to the moving speed of the light focusing element, an inverse actuator driving signal having a pulse duration and a pulse amplitude may be generated, wherein at least one of the pulse duration and the pulse amplitude (i.e., the pulse duration and/or the pulse amplitude) is set so as to be equal to or less than the current pulse duration and the current pulse amplitude. Likewise, the pulse duration and the pulse amplitude are in proportion to the moving speed of the light focusing element.

The actuator is driven using an actuator driving signal including the generated inverse actuator driving signal in operation 405.

A program for executing a gap pull-in method according to the invention can also be embodied as computer-readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Aspects of the present invention may also be realized as a data signal embodied in a carrier wave and comprising a program readable by a computer and transmittable over the Internet.

According to aspects of the present invention, during a gap pull-in in a near-field optical disk drive, an inverse actuator driving signal corresponding to overshoot is adaptively generated according to a moving speed of a light focusing element including an SIL attached thereto when an open loop state is changed to a closed loop state, and then an actuator is driven. Thus, stable gap pull-in can be performed by minimizing the overshoot due to the moving speed of the light focusing element and disturbance of the disk and preventing the disk from colliding with the SIL.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A gap pull-in method for a near-field optical disk drive including a light focusing element, the method comprising:
generating an inverse actuator driving signal having a pulse duration and a pulse amplitude according to a moving speed of the light focusing element when an open loop state is changed to a closed loop state during a gap pull-in; and
driving an actuator using the inverse actuator driving signal.

2. The gap pull-in method as claimed in claim 1, wherein a gap pull-in section between a first point, at which a far-field range is changed to a near-field range in the open loop state, and a second point, at which the open loop state is changed to the closed loop state, is divided into N number of sections, and the moving speed of the light focusing element is variably set for each respective section of the N number of sections, where N is an integer equal to or greater than 2.

3. The gap pull-in method as claimed in claim 2, wherein the gap pull-in section between the first point and the second point is divided according to a time unit.

4. The gap pull-in method as claimed in claim 2, wherein the moving speed of the light focusing element for each respective section of the N number sections decreases towards the second point.

5. The gap pull-in method as claimed in claim 1, wherein the generating of the inverse actuator driving signal comprises:
when determined that a moving direction of an optical head is opposite to a moving direction of a surface of a disk according to the moving speed of the light focusing element, generating the inverse actuator driving signal so that the pulse duration and/or the pulse amplitude thereof is set to be greater than a currently set pulse duration and/or a currently set pulse amplitude, respectively; and
when determined that the moving direction of the surface of the disc is a same direction as the moving direction of the optical head according to the moving speed of the light focusing element, generating the inverse actuator driving signal so that the pulse duration and/or the pulse amplitude thereof is set to be equal to or less than the currently set pulse duration and/or the currently set pulse amplitude, respectively.

6. The gap pull-in method as claimed in claim 5, further comprising:
determining that the moving direction of the optical head is opposite to the moving direction of the surface of the disk when the moving speed of the light focusing element is greater than a predetermined reference value; and
determining that the moving direction of the optical head is the same direction as the moving direction of the surface of the disk when the moving speed of the light focusing element is less than or equal to the predetermined reference value.

7. The gap pull-in method as claimed in claim 6, wherein the generating of the inverse actuator driving signal so that the pulse duration and/or the pulse amplitude thereof is set to be equal to or less than the currently set pulse duration and/or the currently set pulse amplitude, respectively, comprises:
generating the inverse actuator driving signal so that the pulse duration and/or the pulse amplitude thereof is set to be equal to the currently set pulse duration and/or the currently set pulse amplitude, respectively, when the moving speed of the light focusing element is equal to the predetermined reference value; and
generating the inverse actuator driving signal so that the pulse duration and/or the pulse amplitude thereof is set to be less than the currently set pulse duration and/or the currently set pulse amplitude, respectively, when the moving speed of the light focusing element is less than the predetermined reference value.

8. An optical disk driving apparatus having a disk loaded therein, the optical disk driving apparatus comprising:
an optical head including a light focusing element to focus light on the disk and an actuator to move the light focusing element in a focusing direction;
a gap error signal detection unit to detect a gap error signal from a signal output from the optical head;
an actuator driving unit to drive the actuator included in the optical head; and
a gap servo controlling unit to provide an actuator driving signal for gap pull-in to the actuator driving unit according to the gap error signal output from the gap error signal detection unit,
wherein, when an open loop state is changed to a closed loop state in the gap pull-in, the gap servo controlling unit generates an inverse actuator driving signal having a pulse duration and a pulse amplitude based on a moving speed of the light focusing element, and provides the generated inverse actuator driving signal to the actuator driving unit.

9. The optical disk driving apparatus as claimed in claim 8, wherein the gap servo controlling unit divides a gap pull-in section between a first point, at which a far-field range is changed to a near-field range in the open loop state, and a second point, at which the open loop state is changed to the closed loop state, into N number of sections, and the moving speed of the light focusing element is variably set for each respective section of the N number of sections, where N is an integer equal to or greater than 2.

10. The optical disk driving apparatus as claimed in claim 9, wherein the gap pull-in section between the first point and the second point is divided according to a time unit.

11. The optical disk driving apparatus as claimed in claim 9, wherein the moving speed of the light focusing element for each respective section of the N number of sections decreases towards the second point.

12. The optical disk driving apparatus as claimed in claim 8, wherein the gap servo controlling unit:
generates the inverse actuator driving signal so that the pulse duration and/or the pulse amplitude thereof is set to be greater than a currently set pulse duration and/or a currently set pulse amplitude, respectively, when determined that a moving direction of the optical head is opposite to a moving direction of a surface of the disk according to the moving speed of the light focusing element; and
generates the inverse actuator driving signal so that the pulse duration and/or the pulse amplitude thereof is set to be equal to or less than a currently set pulse duration and/or a currently set pulse amplitude, respectively, when determined that the moving direction of the surface of the disk is a same direction as the moving direction the optical head according to the moving speed of the light focusing element.

13. The optical disk driving apparatus as claimed in claim 8, wherein the pulse duration and pulse amplitude of the inverse actuator driving signal are proportional to the moving speed of the light focusing element.

14. The optical disk driving apparatus as claimed in claim 12, wherein the gap servo controlling unit:
determines that the moving direction of the optical head is opposite to the moving direction of the surface of the disk when the moving speed of the light focusing element is greater than a predetermined reference value; and
determines that the moving direction of the optical head is the same direction as the moving direction of the surface of the disk when the moving speed of the light focusing element is less than or equal to the predetermined reference value.

15. The optical disk driving apparatus as claimed in claim 14, wherein the gap servo controlling unit:
generates the inverse actuator driving signal so that the pulse duration and/or the pulse amplitude thereof is set to be equal to the currently set pulse duration and/or the currently set pulse amplitude, respectively, when the moving speed of the light focusing element is equal to the predetermined reference value; and
generates the inverse actuator driving signal so that the pulse duration and/or the pulse amplitude thereof is set to be less than the currently set pulse duration and/or the currently set pulse amplitude, respectively, when the moving speed of the light focusing element is less than the predetermined reference value.
